(19) Europäisches Patentamt
European Patent Office
Office européen des brevets

(11) **EP 2 260 012 B1**

(12) **FASCICULE DE BREVET EUROPEEN**

(45) Date de publication et mention de la délivrance du brevet:
**05.08.2020  Bulletin 2020/32**

(21) Numéro de dépôt: **09709461.9**

(22) Date de dépôt: **13.02.2009**

(51) Int Cl.:
**C04B 35/195** *(2006.01)*    **C04B 35/653** *(2006.01)*

(86) Numéro de dépôt international:
**PCT/FR2009/050228**

(87) Numéro de publication internationale:
**WO 2009/101368 (20.08.2009 Gazette 2009/34)**

(54) **POUDRE DE BSAS**

BSAS-PULVER

BSAS POWDER

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **13.02.2008  US 30225**

(43) Date de publication de la demande:
**15.12.2010  Bulletin 2010/50**

(73) Titulaire: **SAINT-GOBAIN CENTRE DE RECHERCHES ET D'ETUDES EUROPEEN
92400 Courbevoie (FR)**

(72) Inventeurs:
• **MARLIN, Samuel
F-13750 Plan D'orgon (FR)**
• **WALLAR, Howard
Rutland
Massachusetts 01543 (US)**

(74) Mandataire: **Nony
11 rue Saint-Georges
75009 Paris (FR)**

(56) Documents cités:
EP-A1- 1 044 943    EP-A2- 1 591 432
FR-A1- 2 921 204    FR-A1- 2 927 272
JP-B2- 3 916 094    US-A1- 2004 151 840

EP 2 260 012 B1

## Description

Les matériaux composites à base de carbure de silicium (SiC), et particulièrement les composites SiC-SiC, présentent des propriétés mécaniques à hautes températures particulièrement utiles dans des applications telles que des turbines à gaz, des échangeurs de chaleur, des moteurs à combustion interne, etc.

Dans des environnements aqueux, c'est-à-dire en présence d'eau et/ou de vapeur d'eau, les composites à base de carbure de silicium ont cependant tendance à se dégrader, comme cela est décrit notamment dans US 6,254,935. Pour protéger ces composites, on applique classiquement une barrière environnementale, en anglais « environnemental barrier coating », en particulier sous la forme d'un ensemble de couches de silico-aluminate de baryum-strontium (BSAS). Avantageusement, une barrière environnementale de BSAS évite une dégradation trop rapide des composites dans un environnement oxydant aqueux, notamment en présence de vapeur d'eau, à haute température.

L'utilisation de BSAS comme élément de barrière environnementale est par exemple décrite dans US 2005/238888, US 6,787,195, US 7,226,668 ou dans l'article « Residual stresses and their effects on the durability of environmental barrier coating for Sic ceramics », de Kang N. Lee et al., J. Am. Ceram. Soc, 88 [12] 3483-3488 (2005) ou encore dans l'article « Upper temperature limit of environmental barrier coating based on Mullite and BSAS » de Kang N. Lee et al., J. Am. Ceram. Soc, 86 [8] 1299-1306 (2003).

La barrière environnementale peut être fabriquée suivant différentes techniques, et en particulier par projection plasma, ou par imprégnation à partir d'une solution sol-gel ou d'une barbotine, puis traitement thermique. Les poudres utilisées peuvent être des mélanges des différents oxydes de base du BSAS, ou des précurseurs de ces oxydes, ou des poudres de particules de BSAS formées par exemple par frittage de tels mélanges de poudres. Lors d'une projection plasma, les matières premières sont pulvérisées sous forme de fines gouttelettes sur le substrat où elles refroidissent très rapidement, formant ainsi une barrière environnementale de structure lamellaire, amorphe à plus de 90 % en volume, comme décrit dans US 6,254,935.

Par ailleurs, JP 3 916 094 décrit une poudre de particules en un verre comportant 14 à 45% de SrO, 10 à 35% de $Al_2O_3$, 37 à 62% de $SiO_2$ et 0,1 à 10% de MgO.

Il existe un besoin permanent pour des barrières environnementales à base de BSAS présentant une efficacité améliorée et pour des procédés permettant de fabriquer de telles barrières environnementales.

Un but de l'invention est de satisfaire ce besoin.

## Résumé de l'invention

Selon l'invention, on atteint ce but au moyen d'une poudre comportant au moins 95%, de préférence au moins 99%, de préférence encore sensiblement 100% en nombre, de grains fondus et de préférence coulés, lesdits grains présentant la composition chimique suivante, dite « composition conforme à l'invention », en pourcentages massiques sur la base des oxydes, et pour un total de 100 % :

- 25,9% $\leq$ BaO $\leq$ 35,4%, de préférence 29,8% $\leq$ BaO $\leq$ 33,6%, de préférence encore BaO : sensiblement égal à 31,7%,
- 0 $\leq$ SrO $\leq$ 31,8%, de préférence 2,8% $\leq$ SrO $\leq$ 28,2%, de préférence 4,2% $\leq$ SrO $\leq$ 11,7%, de préférence 5,7% $\leq$ SrO $\leq$ 8,6%, de préférence encore sensiblement égal à 7,1 %,
- 27,2% $\leq$ $Al_2O_3$ $\leq$ 31,3%, de préférence 27,5% $\leq$ $Al_2O_3$ $\leq$ 30,8%, de préférence 27,7% $\leq$ $Al_2O_3$ $\leq$ 28,7%, de préférence 27,9% $\leq$ $Al_2O_3$ $\leq$ 28,3%, de préférence encore $Al_2O_3$: sensiblement égal à 28,1%,
- 32% $\leq$ $SiO_2$ $\leq$ 36,9%, de préférence 32,4% $\leq$ $SiO_2$ $\leq$ 36,3%, de préférence 32,9% $\leq$ $SiO_2$ $\leq$ 33,3% de préférence encore $SiO_2$ : sensiblement égal à 33,1%.
- Autres espèces: $\leq$ 1%, de préférence $\leq$ 0,7%, de préférence encore $\leq$ 0,5%,

au moins la teneur d'un des oxydes BaO et SrO, voire la teneur de chacun de ces oxydes, étant supérieure à 0,3 %, la taille desdits grains (présentant une composition conforme à l'invention) étant comprise entre 5 à 150 microns.

La fusion des matières premières, nécessaire pour fabriquer cette poudre, permet une distribution des différents oxydes au sein des grains plus homogène que la distribution de ces oxydes dans les particules frittées utilisées selon la technique antérieure. Elle permet également une distribution plus homogène des différents oxydes entre les grains de la poudre.

Ces effets de la fusion sont encore accrus lorsque le liquide en fusion a été maintenu sous cette forme pendant plusieurs secondes, de préférence pendant au moins 10 secondes, de préférence au moins une minute.

Sans être liés par cette théorie, les inventeurs considèrent que c'est cette grande homogénéité de la poudre et des grains de la poudre qui améliore la durée de vie de la barrière environnementale, en particulier dans un environnement aqueux.

Cette homogénéité permet en effet d'augmenter l'uniformité chimique du dépôt. Elle conduit donc à une homogénéité de dilatation thermique supérieure à celle d'une barrière obtenue avec les poudres de l'art antérieur. Il en résulte une diminution de la quantité de microfissures dans la couche de BSAS formée, ce qui permet de mieux protéger le substrat des éléments agressifs, notamment de la vapeur d'eau. La meilleure homogénéité chimique de la barrière obtenue à partir d'une poudre de l'invention permet en outre, avantageusement, de construire des modèles de durée de vie plus prévisibles.

De préférence, les grains présentant une composition conforme à l'invention représentent plus de 97 % en masse, de préférence plus de 99 %, de préférence encore plus de 99,9 %, de préférence 100 % des particules de la poudre selon l'invention.

La poudre selon l'invention peut encore comporter une ou plusieurs des caractéristiques optionnelles suivantes :

- La taille médiane $D_{50}$ de la poudre est supérieure à 20 microns et/ou inférieure à 40 microns, une taille médiane d'environ 30 microns étant bien adaptée.
- La taille des grains peut être supérieure à 5 microns, voire supérieure à 10 microns, voire même à 45 microns et/ou inférieure à 140 microns, voire inférieure à 125 microns ou inférieure à 75 microns.
- En variante, la taille des grains peut être supérieure à 10 microns et/ou inférieure à 45 microns, la taille médiane étant alors de préférence comprise entre 10 et 15 $\mu$m.
- Les grains sont au moins en partie cristallisés, notamment sous les phases celsian et hexacelsian. En particulier, la poudre selon l'invention peut comporter plus de 90%, de préférence plus de 95%, de préférence encore plus de 99%, en nombre, voire être constituée de grains dans lesquels les phases celsian et hexacelsian représentent au total plus de 10 % en volume, voire plus de 15 %, voire même plus de 20 % en volume desdits grains.
- La composition molaire des grains est

$$(BaO)_{1-x}.(SrO)_x.Al_2O_3.SiO_2 \qquad (1)$$

avec $0 \leq x \leq 1$, de préférence $0,1 \leq x \leq 0,9$, de préférence $0,15 \leq x \leq 0,4$, de préférence encore $0,2 \leq x \leq 0,3$.
- Dans un mode de réalisation, la poudre contient moins de 1% massique de mullite, de préférence moins de 0,1 % massique de mullite, voire pas de mullite.

L'invention concerne encore un procédé de fabrication d'une poudre selon l'invention comportant les étapes suivantes :

a) préparation d'une charge de départ comportant des précurseurs de BSAS, de préférence au moins en partie sous forme solide, de préférence tous sous forme solide ;
b) fusion de la charge de départ de manière à former un bain de liquide en fusion ;
c) solidification du liquide en fusion, après coulage optionnel du bain de liquide en fusion ;
d) optionnellement, réduction granulométrique, en particulier par broyage, et/ou sélection granulométrique et/ou déferrage et/ou atomisation et/ou agglomération puis consolidation par traitement thermique,

les paramètres du procédé, notamment la charge de départ, et en particulier la nature et la quantité des précurseurs de la charge de départ, étant déterminés de manière à obtenir, à l'issue de l'étape c) ou de l'étape d), une poudre conforme à l'invention.

Avantageusement, ce procédé permet de fabriquer des grains de BSAS de façon plus productive que par des procédés par frittage. Les grains présentent en outre avantageusement une grande homogénéité chimique, c'est-à-dire que sensiblement tous les grains de la poudre présentent une composition chimique sensiblement identique.

La poudre obtenue par ce procédé est d'une très grande pureté, notamment elle ne contient pas de mullite. Avantageusement, cette pureté permet de réduire la vitesse de corrosion à la vapeur d'eau.

A l'étape b), la fusion peut notamment être effectuée au moyen d'une torche plasma, d'un four à plasma, d'un four à induction, ou, de préférence, d'un four à arc. De préférence, le temps de maintien en fusion est supérieur à 10 secondes, de préférence à 1 minute, ce qui exclut l'utilisation d'une torche plasma.

L'invention concerne aussi un procédé de fabrication d'une barrière environnementale, notamment pour protéger des parois d'une turbine à gaz, d'un échangeur de chaleur ou d'un moteur à combustion interne, par projection flamme ou projection plasma d'une matière fondue obtenue à partir d'un mélange de départ comportant une poudre selon l'invention.

Le mélange de départ peut ne contenir que des grains selon l'invention, mais en variante, on peut ajouter d'autres grains, et en particulier des grains de mullite. Ces autres grains peuvent notamment favoriser l'accord dilatométrique entre le substrat et la barrière environnementale de BSAS.

L'invention concerne enfin une turbine à gaz, un échangeur de chaleur, et un moteur à combustion interne comportant une barrière environnementale obtenue à partir d'une poudre selon l'invention.

Comme on le verra plus en détail dans la suite de la description, cette barrière environnementale présente avantageusement une homogénéité chimique très élevée et s'avère particulièrement résistante dans le temps.

**Brève description de figures**

D'autres caractéristiques et avantages apparaîtront encore à la lecture de la description qui va suivre et à l'examen du dessin annexé dans lequel :

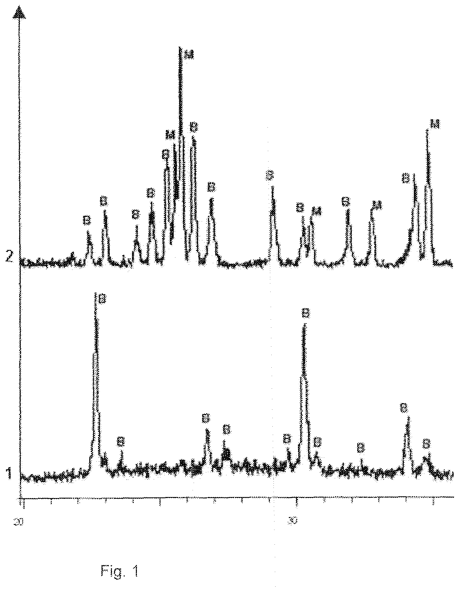

- la figure 1 représente les diagrammes de diffraction X obtenus pour une poudre d'un exemple comparatif (référencé « 2 ») et pour une poudre conforme à l'invention (référencée « 1 »), l'axe des abscisses représentant le domaine angulaire 2θ considéré, les pics de diffraction repérés « B » étant des pics de diffraction de BSAS et les pics de diffraction repérés « M » étant des pics de diffraction de mullite ;

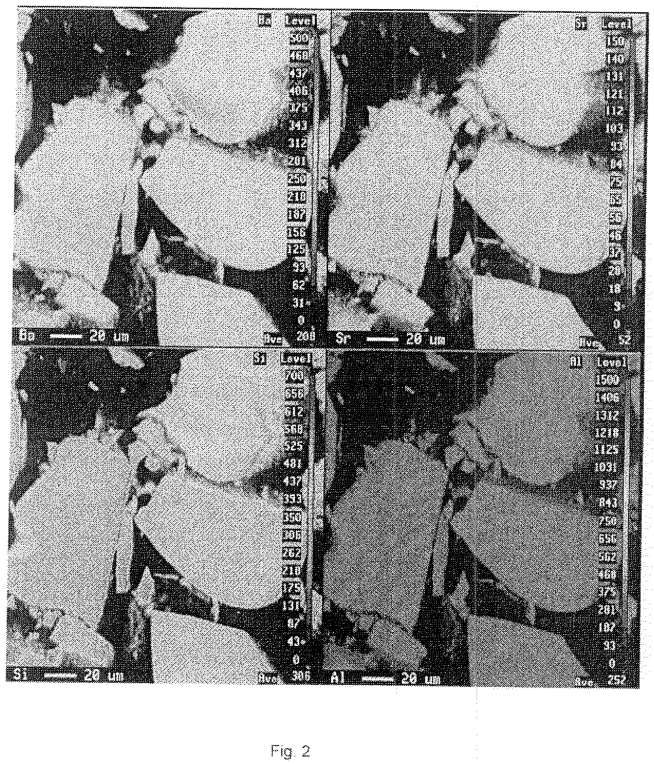

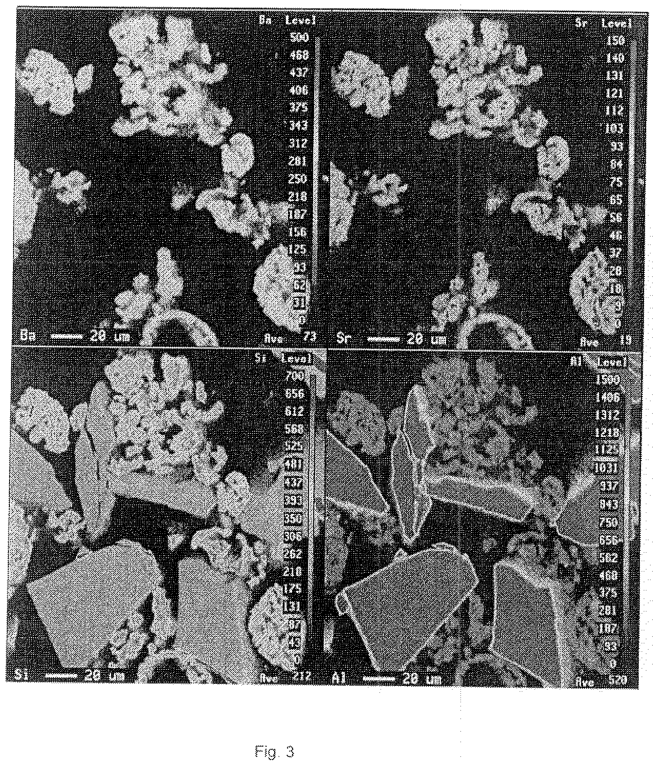

- les figures 2 et 3 représentent des cartographies d'une poudre selon l'invention et d'une poudre selon la technique antérieure, respectivement. Quatre photographies permettent de visualiser, pour chaque cartographie, la distribution des éléments baryum, strontium, silicium et aluminium.

**Définitions**

- Les percentiles ou « centiles » 10 ($D_{10}$), 50 ($D_{50}$), et 90 ($D_{90}$) sont les tailles de grains correspondant aux pourcentages, en nombre, de 10 %, 50 %, et 90 % respectivement, sur la courbe de distribution granulométrique cumulée des tailles de grains de la poudre, les tailles de grains étant classées par ordre croissant. Par exemple, 10 %, en volume, des grains de la poudre ont une taille inférieure à $D_{10}$ et 90 % des grains en volume ont une taille supérieure à $D_{10}$. Les percentiles peuvent être déterminés à l'aide d'une distribution granulométrique réalisée à l'aide d'un granulomètre laser. $D_{50}$ correspond à la « taille médiane » d'un ensemble de grains, c'est-à-dire la taille divisant les grains de cet ensemble en première et deuxième populations égales en nombre, ces première et deuxième populations ne comportant que des grains présentant une taille supérieure, ou inférieure respectivement, à la taille médiane.

- On appelle « taille » d'une particule sa plus grande dimension mesurée sur une image de cette particule. La mesure de la taille des particules d'une poudre s'effectue à partir d'une image de cette poudre versée sur un feutre autocollant.

- Par « précurseur » de BSAS, on entend un constituant dont au moins un des éléments est susceptible d'être incorporé dans du BSAS d'un grain selon l'invention lors de sa fabrication. Les poudres de particules frittées de BSAS utilisées selon la technique antérieure, les poudres d'alumine, de silice, de BaO, de $BaCO_3$, de SrO et de $SrCO_3$ sont des exemples de précurseurs.

- Par « impuretés», on entend les constituants inévitables, introduits nécessairement avec les matières premières ou résultant de réactions avec ces constituants. Les impuretés ne sont pas des constituants nécessaires, mais seulement tolérés. Les « autres espèces » constituant le complément à 100 % des grains présentant une composition conforme à l'invention comprennent les impuretés et, de préférence, sont constituées des impuretés.

- Par « produit fondu », on entend un produit obtenu par solidification par refroidissement, d'un bain de liquide en fusion.

- Par « produit coulé », on entend un produit obtenu par un procédé dans lequel un bain de liquide en fusion a été préparé, puis versé, par exemple dans un moule, pour refroidir. Le versement peut aussi être effectué dans un liquide ou être utilisé pour produire un filet de liquide en fusion. Un soufflage, par exemple avec un gaz, peut alors être effectué à travers ce filet pour produire des gouttelettes.

- Un « bain de liquide en fusion » est une masse qui, pour conserver sa forme, doit être contenue dans un récipient. Un bain de liquide en fusion peut contenir des parties solides, mais en quantité insuffisante pour qu'elles puissent structurer ladite masse.

- Dans la formule (1) donnant une composition molaire préférée des grains selon l'invention, $0 \leq x \leq 1$. Lorsque x est égal à 0, les grains selon l'invention sont constitués d'aluminosilicate de strontium (SAS). Lorsque x est égal à 1, les grains selon l'invention sont constitués d'aluminosilicate de baryum (BAS). Par souci de clarté, dans la présente description, on entend par « BSAS » tous les produits de BSAS, de SAS ou de BAS présentant une composition conforme à l'invention, et notamment les produits dont la composition répond à la formule (1), même si x = 0 ou x = 1.

Pour fabriquer une poudre selon l'invention, on peut procéder suivant un procédé comportant les étapes a) à d), notamment comme décrit en détail ci-après.

A l'étape a), des poudres de précurseurs sont mélangées de manière à constituer un mélange sensiblement homogène.

De préférence, les précurseurs comportent, de préférence sont constitués par, des oxydes, notamment BaO, SrO, $SiO_2$ et $Al_2O_3$, et/ou des précurseurs de ces oxydes, par exemple sous forme de carbonate ou de nitrate, et/ou des poudres de BSAS selon la technique antérieure.

Selon l'invention, l'homme du métier ajuste la composition de la charge de départ de manière à obtenir, à l'issue de l'étape b) de fusion, une masse de liquide en fusion présentant une composition conforme à celle des grains selon l'invention.

L'analyse chimique des grains est généralement sensiblement identique à celle de la charge de départ, au moins en ce qui concerne les éléments Ba, Sr, Al et Si. En outre, le cas échéant, par exemple pour tenir compte de la présence d'oxydes volatils, ou pour tenir compte de la perte en $SiO_2$ lorsque la fusion est opérée dans des conditions réductrices, l'homme du métier sait comment adapter la composition de la charge de départ en conséquence.

De préférence, aucun ingrédient autre que BaO, SrO, $SiO_2$, $Al_2O_3$, des précurseurs de ces oxydes et une poudre de particules de BSAS selon la technique antérieure, notamment frittées ou obtenues par « spray pyrolyse », n'est introduit volontairement dans la charge de départ, les autres oxydes présents étant des impuretés.

A l'étape b), la charge de départ est fondue, de préférence dans un four à arc électrique. L'électrofusion permet en effet la fabrication de grandes quantités de produit avec des rendements intéressants. Mais tous les fours connus sont envisageables, comme un four à induction, un four solaire ou un four à plasma par exemple, pourvu qu'ils permettent de faire fondre, de préférence complètement, la charge de départ. Les conditions peuvent être oxydantes ou réductrices, de préférences oxydantes. Si la fusion se déroule sous atmosphère réductrice, il sera cependant nécessaire de réaliser ensuite un traitement thermique dans une atmosphère oxygénée visant à ré-oxyder la poudre de BSAS obtenue.

Pour obtenir une poudre bien oxydée, il est donc préférable d'opérer la fusion dans des conditions oxydantes.

De préférence, la fusion en conditions oxydantes s'effectue en arcs courts.

A l'étape b), la fusion est de préférence réalisée grâce à l'action combinée d'un arc électrique, court ou long, ne produisant pas de réduction, et d'un brassage favorisant la réoxydation des produits.

On peut utiliser le procédé de fusion à l'arc décrit dans le brevet français n° 1 208 577 et ses additions n° 75893 et 82310.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain de liquide en fusion et en brassant ledit bain, soit par l'action de l'arc lui-même, soit en faisant barboter dans le bain un gaz oxydant (air ou oxygène, par exemple) ou encore en ajoutant au bain des substances dégageant de l'oxygène telles que des peroxydes.

Le liquide résultant de la fusion est de préférence maintenu en fusion pendant une durée minimale, de préférence supérieure à 10 secondes, de préférence encore supérieure à 1 minute, de manière à favoriser son homogénéisation chimique. La durée de maintien sous la forme liquide pendant une durée supérieure à 10 secondes permet d'obtenir un liquide particulièrement homogène avant le coulage. Au contraire, les gouttelettes obtenues par projection plasma lors de la fabrication de barrières environnementales selon la technique antérieure sont classiquement formées par fusion d'une poudre de grains frittés ou d'un mélange de poudres des oxydes précurseurs de BSAS mais sont refroidies pratiquement immédiatement après leur fusion, ce qui ne favorise pas l'homogénéisation chimique.

A l'étape c), le bain de liquide en fusion est de préférence coulé. Il peut être versé dans un moule, dans un liquide de refroidissement, par exemple de l'eau, ou être dispersé, par exemple par soufflage, tous ces procédés étant bien connus.

En particulier, un filet du liquide en fusion peut être dispersé en petites gouttelettes liquides qui, par suite de la tension superficielle, prennent, pour la majorité d'entre elles, une forme sensiblement sphérique. Cette dispersion peut être opérée par soufflage, notamment avec de l'air et/ou de la vapeur d'eau, ou par tout autre procédé d'atomisation d'une matière fondue connu de l'homme de l'art. Le refroidissement résultant de la dispersion conduit à la solidification des gouttelettes liquides. On obtient alors des grains de BSAS fondus et coulés présentant classiquement une taille de 0,1 à 4 mm.

En variante, le bain en fusion peut être coulé dans de l'eau, sans soufflage.

Dans un mode de réalisation, la vitesse de refroidissement est adaptée de manière à cristalliser au moins 10 % en volume, voire au moins 20 % en volume, de la matière en cours de solidification. Il faut donc alors éviter un refroidissement trop brutal ou prévoir un traitement thermique de cristallisation.

A l'étape d), la taille des produits fondus et coulés obtenus à l'étape c) est éventuellement ajustée. A cet effet, les blocs ou les grains fondus et coulés peuvent être broyés, puis subir un tri granulométrique.

Avant l'opération de tri granulométrique, qui peut notamment être réalisée par tamisage ou par séparation à air, les particules peuvent subir un traitement de déferrage visant à réduire, voire éliminer, les particules magnétiques éventuellement introduites dans la poudre de BSAS lors de l'étape de broyage.

Après l'étape c), ou, le cas échéant, après l'étape d), la poudre peut également être encore transformée par atomisation, ou par agglomération puis consolidation par traitement thermique, afin d'être parfaitement adaptée à l'application visée.

Notamment pour des applications par projection, la taille des grains est de préférence supérieure à 5 microns, voire supérieure à 10 microns, voire même à 45 microns et/ou inférieure à 140 microns, voire inférieure à 125 microns ou inférieure à 75 microns. Les tailles sont de préférence choisies en fonction de l'épaisseur et de la porosité souhaitées pour la barrière environnementale, et peuvent notamment être dans les plages suivantes : 10-63 ; 5-25 ; 10-45 ; 45-75 ; 45-125 microns.

Notamment pour des applications impliquant un coulage d'une barbotine, la taille des grains est de préférence inférieure à 45 microns, le diamètre médian étant de préférence compris entre 10 et 15 $\mu$m.

La poudre selon l'invention peut être amorphe si le refroidissement a été très rapide, ou partiellement cristallisée. A la différence de grains amorphes, des grains partiellement cristallisés ne sont pas transparents. En particulier, la poudre selon l'invention peut comporter plus de 90%, voire plus de 95%, ou encore plus de 99%, en nombre, voire être constituée de grains dans lesquels les phases celsian et hexacelsian représentent au total plus de 10 % en volume, voire plus de 15 %, voire même plus de 20 % en volume.

La quantité de phases celsian et hexacelsian est classiquement déterminée par une mesure par diffraction X sur poudre en utilisant la méthode de Rietveld avec un étalon externe et en appliquant la correction de Briendley.

L'écart-type « $\sigma$ » pour estimer l'homogénéité de la distribution d'un oxyde dans un grain peut être évalué par « $n$ » mesures ou « pointés », en des emplacements choisis de manière aléatoire dans le grain, de la manière suivante :

$$\sigma = \sqrt{\frac{1}{n}\sum_{i=1}^{n}\left(z_i - \overline{z}\right)^2} \,,$$

où

- $z_i$ désigne la teneur massique de l'oxyde considéré mesurée localement à l'emplacement du pointé « $i$ » dans le grain, et
- $\overline{z}$ désigne la teneur massique moyenne de l'oxyde considéré dans le grain, obtenue en moyennant arithmétiquement

les valeurs $z_i$, c'est-à-dire $\left(\overline{z} = \frac{1}{n}\sum_{i=1}^{n}z_i\right)$.

De préférence $n$ est supérieur à 3, de préférence à 5, de préférence encore à 10.

L'écart-type relatif ou « coefficient de variation », noté $\sigma_R$, exprimé en pourcentage de la moyenne est calculé de la manière suivante :

$$\sigma_R = 100 \times (\sigma / \overline{z})$$

Dans un mode de réalisation selon l'invention, plus de 80%, voire plus de 90% en masse, plus de 95%, plus de 99%, et même sensiblement 100% des grains présentent des écarts-types relatifs $\sigma_R$ suivants :

- Pour $SiO_2$ : $\sigma_{R\,SiO2}$ est inférieur à 4%, de préférence inférieur à 3 %, de préférence inférieur à 1 %, de préférence encore inférieur à 0,5%, et
- Pour $Al_2O_3$ : $\sigma_{R\,Al2O3}$ est inférieur à 4%, de préférence inférieur à 3 %, de préférence inférieur à 1 %, de préférence encore inférieur à 0,5%, et
- Pour BaO : $\sigma_{R\,BaO}$ est inférieur à 15%, de préférence inférieur à 10%, de préférence inférieur à 3%, de préférence encore inférieur à 1%, et
- Pour SrO : $\sigma_{R\,SrO}$ est inférieur à 15%, de préférence inférieur à 10%, de préférence inférieur à 3%, de préférence encore inférieur à 1%.

Dans un mode de réalisation selon l'invention, plus de 40%, en masse, voire plus de 60%, plus de 80%, plus de 95%, plus de 99%, et même sensiblement 100% des grains présentent des écarts-types relatifs $\sigma_R$ suivants :

- Pour $SiO_2$ : $\sigma_{R\ SiO2}$ est inférieur à 3 %, de préférence inférieur à 1 %, de préférence encore inférieur à 0,5%, et
- Pour $Al_2O_3$ : $\sigma_{R\ Al2O3}$ est inférieur à 3 %, de préférence inférieur à 1 %, de préférence encore inférieur à 0,5%, et
- Pour $BaO$ : $\sigma_{R\ BaO}$ est inférieur à 10%, de préférence inférieur à 3%, de préférence encore inférieur à 1%, et
- Pour $SrO$ : $\sigma_{R\ SrO}$ est inférieur à 10%, de préférence inférieur à 3%, de préférence encore inférieur à 1%.

Dans un mode de réalisation selon l'invention, plus de 20%, en masse, voire plus de 30%, plus de 40%, plus de 50%, voire plus de 60%, des grains présentent des écarts-types relatifs $\sigma_R$ suivants :

- Pour $SiO_2$ : $\sigma_{R\ SiO2}$ est inférieur à 1 %, de préférence encore inférieur à 0,5%, et
- Pour $Al_2O_3$ : $\sigma_{R\ Al2O3}$ est inférieur à 1%, de préférence encore inférieur à 0,5%, et
- Pour $BaO$ : $\sigma_{R\ BaO}$ est inférieur à 3 %, de préférence encore inférieur à 1 %, et
- Pour $SrO$ : $\sigma_{R\ SrO}$ est inférieur à 3 %, de préférence encore inférieur à 1 %.

Dans un mode de réalisation selon l'invention, plus de 10%, en masse, voire plus de 15%, plus de 20%, plus de 25 %, voire plus de 30 %, des grains présentent des écarts-types relatifs $\sigma_R$ suivants :

- Pour $SiO_2$ : $\sigma_{R\ SiO2}$ est inférieur à 0,5%, et
- Pour $Al_2O_3$ : $\sigma_{R\ Al2O3}$ est inférieur à 0,5%, et
- Pour $BaO$ : $\sigma_{R\ BaO}$ est inférieur à 1%, et
- Pour $SrO$ : $\sigma_{R\ SrO}$ est inférieur à 1%.

L'écart-type «$\sigma$'» pour estimer l'homogénéité de la distribution d'un oxyde entre les différents grains dans une poudre peut être évalué par «$n$'» mesures effectuées sur des grains de la poudre choisis de manière aléatoire, de la manière suivante :

$$\sigma' = \sqrt{\frac{1}{n'}\sum_{i=1}^{n'}\left(z'_i - \overline{z'}\right)^2} \ ,$$

où

- $z'_i$ désigne la teneur massique de l'oxyde dans le grain « $i$ » de la poudre, éventuellement calculée par une moyenne arithmétique entre plusieurs mesures locales sur ce grain, et
- $\overline{z'}$ désigne la teneur massique moyenne de l'oxyde considéré sur les « $n$' » grains choisis. Cette teneur est obtenue en moyennant arithmétiquement les valeurs $z'_i$, c'est-à-dire $\left(\overline{z'} = \frac{1}{n'}\sum_{i=1}^{n'} z'_i\right)$.

De préférence $n$' est supérieur à 5, de préférence supérieur ou égal à 10. L'écart-type relatif est alors $\sigma_R' = 100 \times (\sigma' / \overline{z'})$

De préférence selon l'invention, les écarts-types relatifs $\sigma_R'$ sur les teneurs en oxydes de la poudre, en ne considérant que des grains présentant une composition conforme à l'invention, sont tels que:

- Pour $SiO_2$: $\sigma_{R\ SiO2}'$ est inférieur à 4%, de préférence inférieur à 2%, de préférence inférieur à 1,5%, de préférence encore inférieur à 1%, et
- Pour $Al_2O_3$ : $\sigma_{R\ Al2O3}'$ est inférieur à 4%, de préférence inférieur à 2%, de préférence inférieur à 1,5%, de préférence encore inférieur à 1%, et
- Pour $BaO$ : $\sigma'_{R\ BaO}$ est inférieur à 15%, de préférence inférieur à 10%, de préférence inférieur à 6%, de préférence encore inférieur à 1%, et
- Pour $SrO$ : $\sigma'_{R\ SrO}$ est inférieur à 15%, de préférence inférieur à 10%, de préférence inférieur à 6%, de préférence encore inférieur à 1%.

Une poudre selon l'invention peut être utilisée pour la fabrication d'une barrière environnementale, notamment pour protéger des parois d'une turbine à gaz, d'un échangeur de chaleur ou d'un moteur à combustion interne, par projection flamme ou projection plasma.

A cet effet, la poudre est classiquement fondue, puis projetée sous la forme de fines gouttelettes sur la paroi à protéger où elles se solidifient par refroidissement rapide.

Dans un mode de réalisation, les gouttelettes sont projetées sur une couche intermédiaire, par exemple en mullite, $SiO_2$, aluminosilicate de mullite-baryum strontium, silicate d'yttrium-mullite, aluminosilicate de mullite-calcium ou silicium métal. Cette couche intermédiaire peut elle-même être fixée sur la paroi à protéger par l'intermédiaire d'une couche d'accrochage, par exemple en silicium métal, déposée sur cette paroi, de préférence préalablement nettoyée, par exemple par grenaillage. Avant dépôt de la couche de BSAS, la couche intermédiaire peut subir un traitement thermique, par exemple à environ 1250 °C, pendant environ 24 heures.

Dans certaines applications, la matière projetée est obtenue par fusion d'un mélange d'une poudre selon l'invention et d'autres poudres, en particulier d'une poudre de mullite.

La projection thermique peut être effectuée à une température comprise entre 870 °C et 1200 °C.

L'épaisseur de la barrière environnementale peut être supérieure à 10 $\mu$m, ou supérieure à 50 $\mu$m, voire 75 $\mu$m et/ou inférieure à 750 $\mu$m, voire inférieure à 125 $\mu$m.

Tous les procédés connus pour fabriquer une barrière environnementale sont envisageables, et en particulier ceux décrits dans US 6,254,935 ou US 6,387,456, incorporés par référence.

Les exemples non limitatifs suivants sont donnés dans le but d'illustrer l'invention.

Dans ces exemples, les matières premières employées suivantes ont été choisies, les pourcentages donnés étant des pourcentages massiques :

- Poudre d'alumine $Al_2O_3$ (nom commercial AR75), commercialisée par la société ALCAN, dont la pureté est supérieure à 99% en masse et dont taille médiane $D_{50}$ est de 90$\mu$m ;
- Poudre de $BaCO_3$, commercialisée par la société SPCH, dont la pureté à l'E.D.T.A. est supérieure à 99 % en masse et dont le passant au tamis de 45 $\mu$m est supérieur à 98% ;
- Poudre de $SrCO_3$, commercialisée par la société SPCH, dont la pureté à l'E.D.T.A. est supérieure à 96 % en masse et dont le passant au tamis de 45 $\mu$m est supérieur à 99 % ;
- Sable sédimentaire de silice, commercialisé par la société SIFRACO, de granulométrie 0 à 1 mm.

Une charge de départ de 50 Kg présentant la composition chimique suivante, en pourcentages massiques, a été préparée à partir des matières premières ci-dessus :

| | |
|---|---|
| $Al_2O_3$ : | 25% |
| $SiO_2$: | 29,5% |
| $BaCO_3$: | 36,5% |
| $SrCO_3$ : | 9% |

La charge de départ ainsi obtenue a été versée dans un four de fusion à arc de type Héroult. On a opéré une fusion en arc court de façon à fondre tout le mélange de façon complète et homogène. Les conditions d'élaboration étaient oxydantes. La tension appliquée était de 450 Volts au démarrage, puis de 325 Volts en régime stabilisé. L'énergie appliquée était d'environ 1800 kWh/T de matières premières. La température du liquide en fusion mesurée lors du coulage était comprise entre 1900 et 2100°C.

Le liquide en fusion a ensuite été coulé dans de l'eau à température ambiante. Le produit obtenu se présentait sous la forme de morceaux de quelques millimètres, de couleur sombre et non transparents.

Ces morceaux ont ensuite été broyés dans un broyeur à mâchoires, puis dans un broyeur à rouleaux avec une consigne de pression sur les rouleaux égale à 15 bars.

Une sélection granulométrique par tamisage a ensuite été effectuée afin de sélectionner les grains de la poudre présentant une taille comprise entre 100 et 250 microns et ceux présentant une taille inférieure à 100 microns. La fraction 100 - 250 microns a ensuite été broyée en tourne jarre avec boulet en zircone partiellement stabilisée à la magnésie, pendant 30 minutes. Un tamisage a ensuite été effectué de façon à sélectionner les grains présentant une taille inférieure à 100 microns. Les deux poudres inférieures à 100 microns sélectionnées ont ensuite été réunies, puis ont subi une étape de classification en turbine à air de façon à sélectionner les grains de la poudre présentant une taille comprise entre 10 et 45 microns.

La poudre de l'exemple comparatif est une poudre de grains frittés de BSAS de l'art antérieur disponible sur le marché présentant un $D_{90}$ mesuré à 55,5 $\mu$m, un $D_{50}$ mesuré à 31,2 $\mu$m et un $D_{10}$ mesuré à 16,7 $\mu$m.

Les analyses chimiques et les diagrammes de diffraction X, notamment pour identifier les phases cristallines, ont été réalisés sur des échantillons broyés à une taille médiane $D_{50}$ inférieure à 40 $\mu$m et représentatifs de la poudre obtenue.

L'analyse chimique a été effectuée par fluorescence X et à la microsonde.

Le tableau 1 fournit les compositions massiques des poudres testées et les phases identifiées.

Tableau 1

| | $Al_2O_3$ (%) | $SiO_2$ (%) | BaO (%) | SrO (%) | Impuretés (%) | phases cristallisées |
|---|---|---|---|---|---|---|
| Exemple comparatif | 48,3 | 29,4 | 18,2 | 3,5 | 0,6 | mullite et BSAS |
| Exemple 1 | 27,9 | 32,5 | 32,5 | 6,6 | 0,4 | BSAS |

Le tableau 2 résume les teneurs des impuretés principales :

Tableau 2

| | CaO (%) | $Fe_2O_3$ (%) | $K_2O$ (%) | $ZrO_2$ (%) | $Na_2O$ (%) | NiO (%) | $TiO_2$ (%) | MgO (%) |
|---|---|---|---|---|---|---|---|---|
| Exemple comparatif | 0,02 | < 0,03 | n.d. | 0,13 | 0,12 | n.d. | < 0,02 | < 0,05 |
| Exemple 1 | 0,05 | 0,06 | 0,01 | 0,14 | 0,08 | 0,03 | 0,01 | 0,02 |
| n.d. : non déterminé | | | | | | | | |

Dans la poudre selon l'invention, sensiblement 100 % des grains comportent simultanément $SiO_2$, $Al_2O_3$, SrO et BaO. Dans la poudre de l'exemple comparatif, moins de 90 % des grains présentent simultanément ces quatre oxydes. L'homogénéité chimique entre les différents grains de la poudre selon l'invention est donc remarquable.

La figure 1 montre que la poudre de l'exemple comparatif (diagramme 2) contient de la mullite, à la différence de la poudre selon l'invention testée, où sensiblement 100 % des grains sont des grains de BSAS.

Comme cela apparaît sur les différentes photos de la figure 3, la poudre selon l'invention testée est monophasée et particulièrement homogène. Au contraire, comme représenté sur la figure 4, la poudre selon la technique antérieure est constituée de deux types de grains de morphologie et de composition très différentes.

Le tableau 3 illustre l'homogénéité chimique au sein des grains de la poudre de l'invention testée, et le tableau 4 résume les analyses chimiques effectuées au sein des grains de BSAS de la poudre de l'art antérieur.

Tableau 3

| Grains « i » | %massiques | Pointé n°1 | Pointé n°2 | Pointé n°3 | Pointé n°4 | Pointé n°5 | Moyenne $\bar{z}$ ou $z'_i$ | Ecart type $\sigma$ | Ecart type relatif $\sigma_R$ (%) |
|---|---|---|---|---|---|---|---|---|---|
| Grain n°1 | % $Al_2O_3$ | 28,1 | 28,3 | 28,2 | 28,2 | 28,1 | 28,2 | 0,07 | 0,25 |
| | % $SiO_2$ | 32,5 | 32,5 | 32,8 | 32,7 | 32,8 | 32,6 | 0,15 | 0,46 |
| | % BaO | 32,4 | 32,2 | 32,1 | 32,0 | 32,1 | 32,1 | 0,15 | 0,46 |
| | % SrO | 7,1 | 7,1 | 7,0 | 7,1 | 7,0 | 7,0 | 0,05 | 0,71 |
| Grain n°2 | % $Al_2O_3$ | 28,5 | 28,4 | 28,6 | 28,3 | 28,5 | 28,5 | 0,12 | 0,44 |
| | % $SiO_2$ | 33,0 | 32,8 | 33,0 | 32,8 | 32,9 | 32,9 | 0,09 | 0,26 |
| | % BaO | 31,9 | 32,0 | 31,7 | 32,1 | 31,9 | 31,9 | 0,17 | 0,52 |
| | % SrO | 6,6 | 6,8 | 6,8 | 6,8 | 6,7 | 6,7 | 0,09 | 1,32 |
| Grain n°3 | % $Al_2O_3$ | 28,1 | 28,2 | 28,1 | 28,2 | 28,4 | 28,2 | 0,11 | 0,39 |
| | % $SiO_2$ | 32,9 | 33,3 | 32,8 | 33,2 | 33,0 | 33,0 | 0,22 | 0,65 |
| | % BaO | 32,2 | 31,7 | 32,1 | 31,8 | 31,8 | 31,9 | 0,24 | 0,76 |
| | % SrO | 6,8 | 6,8 | 6,9 | 6,8 | 6,8 | 6,8 | 0,07 | 0,99 |
| Grain n°4 | % $Al_2O_3$ | 28,2 | 28,3 | 27,8 | 28,3 | 28,2 | 28,2 | 0,21 | 0,75 |
| | % $SiO_2$ | 33,1 | 32,5 | 32,4 | 32,4 | 32,5 | 32,6 | 0,31 | 0,95 |
| | % BaO | 31,5 | 31,9 | 32,2 | 32,0 | 32,3 | 32,0 | 0,32 | 1,01 |
| | % SrO | 7,2 | 7,3 | 7,6 | 7,3 | 7,1 | 7,3 | 0,19 | 2,54 |

(suite)

| Grains « i » | %massiques | Pointé n°1 | Pointé n°2 | Pointé n°3 | Pointé n°4 | Pointé n°5 | Moyenne $\bar{z}$ ou $z'_i$ | Ecart type $\sigma$ | Ecart type relatif $\sigma_R$ (%) |
|---|---|---|---|---|---|---|---|---|---|
| Grain n°5 | % $Al_2O_3$ | 28,4 | 28,3 | 28,2 | 28,0 | 28,2 | 28,2 | 0,14 | 0,48 |
|  | % $SiO_2$ | 32,3 | 32,6 | 32,5 | 32,8 | 32,7 | 32,6 | 0,18 | 0,56 |
|  | % BaO | 32,1 | 32,0 | 32,1 | 32,2 | 32,1 | 32,1 | 0,07 | 0,21 |
|  | % SrO | 7,2 | 7,1 | 7,2 | 7,0 | 7,0 | 7,1 | 0,12 | 1,65 |
| Grain n°6 | % $Al_2O_3$ | 28,2 | 28,2 | 28,2 | 28,5 | 28,1 | 28,2 | 0,14 | 0,49 |
|  | % $SiO_2$ | 32,8 | 33,2 | 33,0 | 32,5 | 32,9 | 32,9 | 0,25 | 0,76 |
|  | % BaO | 32,1 | 31,7 | 31,8 | 32,2 | 32,1 | 32,0 | 0,20 | 0,63 |
|  | % SrO | 6,9 | 6,9 | 7,0 | 6,8 | 6,9 | 6,9 | 0,05 | 0,75 |
| Grain n°7 | % $Al_2O_3$ | 28,3 | 29,7 | 28,4 | 28,1 | 28,2 | 28,5 | 0,66 | 2,30 |
|  | % $SiO_2$ | 32,9 | 31,9 | 32,6 | 32,6 | 33,2 | 32,7 | 0,48 | 1,47 |
|  | % BaO | 31,8 | 31,5 | 31,8 | 32,3 | 31,6 | 31,8 | 0,31 | 0,98 |
|  | % SrO | 7,0 | 6,9 | 7,1 | 7,0 | 7,0 | 7,0 | 0,08 | 1,15 |
| Grain n°8 | % $Al_2O_3$ | 28,8 | 28,4 | 28,5 | 28,4 | 28,4 | 28,5 | 0,16 | 0,58 |
|  | % $SiO_2$ | 32,8 | 32,8 | 33,1 | 32,7 | 32,8 | 32,8 | 0,15 | 0,44 |
|  | % BaO | 32,4 | 33,2 | 31,8 | 33,4 | 32,0 | 32,6 | 0,69 | 2,11 |
|  | % SrO | 6,0 | 5,6 | 6,7 | 5,5 | 6,8 | 6,1 | 0,58 | 9,47 |
| Grain n°9 | % $Al_2O_3$ | 28,4 | 28,2 | 28,1 | 29,6 | 28,4 | 28,5 | 0,60 | 2,11 |
|  | % $SiO_2$ | 32,7 | 32,9 | 32,8 | 31,5 | 32,5 | 32,5 | 0,55 | 1,69 |
|  | % BaO | 32,1 | 31,9 | 32,2 | 31,8 | 32,2 | 32,0 | 0,18 | 0,57 |
|  | % SrO | 6,9 | 7,0 | 6,9 | 7,0 | 6,8 | 6,9 | 0,08 | 1,11 |
| Grain n°10 | % $Al_2O_3$ | 28,1 | 28,7 | 27,6 | 28,3 | 28,3 | 28,2 | 0,40 | 1,42 |
|  | % $SiO_2$ | 32,5 | 32,6 | 34,2 | 32,8 | 32,4 | 32,9 | 0,73 | 2,23 |
|  | % BaO | 32,3 | 31,6 | 31,2 | 31,9 | 32,2 | 31,8 | 0,47 | 1,49 |
|  | % SrO | 7,1 | 7,1 | 7,0 | 7,1 | 7,1 | 7,1 | 0,04 | 0,57 |

Tableau 4 (art antérieur)

| Grains « i » | %massiques | Pointé n°1 | Pointé n°2 | Pointé n°3 | Pointé n°4 | Pointé n°5 | Moyenne $\bar{z}$ ou $z'_i$ | Ecart type $\sigma$ | Ecart type relatif $\sigma_R$ (%) |
|---|---|---|---|---|---|---|---|---|---|
| Grain n°1 | % $Al_2O_3$ | 31,6 | 29,5 | 29,6 | 29,7 | 28,7 | 29,8 | 1,07 | 3,57 |
|  | % $SiO_2$ | 29,9 | 32,8 | 32,6 | 33,0 | 32,9 | 32,2 | 1,33 | 4,13 |
|  | % BaO | 30,7 | 30,2 | 30,5 | 30,3 | 30,4 | 30,4 | 0,20 | 0,66 |
|  | % SrO | 7,9 | 7,5 | 7,3 | 7,0 | 8,1 | 7,6 | 0,42 | 5,55 |
| Grain n°2 | % $Al_2O_3$ | 28,5 | 30,3 | 28,4 | 28,4 | 28,3 | 28,8 | 0,84 | 2,91 |
|  | % $SiO_2$ | 33,3 | 32,9 | 33,4 | 33,6 | 33,4 | 33,3 | 0,24 | 0,73 |
|  | % BaO | 30,4 | 30,6 | 29,8 | 30,3 | 30,3 | 30,3 | 0,32 | 1,06 |
|  | % SrO | 7,8 | 6,2 | 8,5 | 7,7 | 8,0 | 7,6 | 0,87 | 11,43 |
| Grain n°3 | % $Al_2O_3$ | 30,5 | 29,7 | 29,3 | 29,6 | 28,8 | 29,6 | 0,63 | 2,12 |
|  | % $SiO_2$ | 32,8 | 33,3 | 33,2 | 33,3 | 33,5 | 33,2 | 0,26 | 0,79 |
|  | % BaO | 30,2 | 30,2 | 29,9 | 29,8 | 29,8 | 30,0 | 0,17 | 0,56 |
|  | % SrO | 6,5 | 6,8 | 7,5 | 7,2 | 7,8 | 7,2 | 0,77 | 10,76 |

(suite)

| Grains « i » | %massiques | Pointé n°1 | Pointé n°2 | Pointé n°3 | Pointé n°4 | Pointé n°5 | Moyenne $\overline{z}$ ou $z'_i$ | Ecart type $\sigma$ | Ecart type relatif $\sigma_R$ (%) |
|---|---|---|---|---|---|---|---|---|---|
| Grain n°4 | % $Al_2O_3$ | 30,1 | 28,0 | 30,2 | 28,8 | 28,5 | 29,1 | 0,97 | 3,35 |
| | % $SiO_2$ | 32,5 | 33,6 | 33,0 | 33,0 | 33,4 | 33,1 | 0,43 | 1,30 |
| | % BaO | 30,9 | 30,3 | 30,6 | 30,6 | 30,7 | 30,6 | 0,22 | 0,71 |
| | % SrO | 6,6 | 8,1 | 6,2 | 7,6 | 7,4 | 7,2 | 0,77 | 10,76 |
| Grain n°5 | % $Al_2O_3$ | 28,4 | 27,8 | 28,5 | 29,5 | 27,5 | 28,3 | 0,75 | 2,63 |
| | % $SiO_2$ | 34,1 | 33,9 | 33,6 | 33,2 | 34,2 | 33,8 | 0,39 | 1,17 |
| | % BaO | 30,9 | 31,2 | 31,1 | 31,0 | 30,7 | 31,0 | 0,19 | 0,60 |
| | % SrO | 6,6 | 7,1 | 6,8 | 6,3 | 7,5 | 6,9 | 0,46 | 6,68 |
| Grain n°6 | % $Al_2O_3$ | 30,7 | 31,0 | 28,5 | 29,7 | 30,2 | 30,0 | 0,97 | 3,23 |
| | % $SiO_2$ | 32,5 | 31,3 | 32,6 | 32,7 | 32,6 | 32,3 | 0,59 | 1,84 |
| | % BaO | 30,6 | 30,6 | 30,3 | 30,6 | 30,3 | 30,5 | 0,17 | 0,57 |
| | % SrO | 6,2 | 7,1 | 8,6 | 7,1 | 6,9 | 7,2 | 0,89 | 12,35 |
| Grain n°7 | % $Al_2O_3$ | 27,5 | 28,7 | 27,8 | 27,9 | 27,9 | 28,0 | 0,42 | 1,50 |
| | % $SiO_2$ | 35,2 | 34,6 | 35,0 | 34,8 | 34,6 | 34,9 | 0,25 | 0,73 |
| | % BaO | 30,6 | 30,4 | 30,7 | 30,7 | 30,8 | 30,6 | 0,14 | 0,46 |
| | % SrO | 6,7 | 6,3 | 6,4 | 6,6 | 6,7 | 6,5 | 0,19 | 2,87 |
| Grain n°8 | % $Al_2O_3$ | 29,2 | 29,0 | 29,5 | 29,3 | 27,8 | 29,0 | 0,66 | 2,27 |
| | % $SiO_2$ | 31,0 | 30,7 | 31,3 | 31,5 | 16,0 | 28,1 | 6,74 | 24,00 |
| | % BaO | 27,5 | 26,8 | 28,8 | 28,5 | 5,6 | 23,4 | 10,00 | 42,67 |
| | % SrO | 12,3 | 13,6 | 10,5 | 10,7 | 50,5 | 19,5 | 17,38 | 89,15 |
| Grain n°9 | % $Al_2O_3$ | 27,5 | 28,4 | 26,8 | 27,4 | 28,1 | 27,6 | 0,64 | 2,30 |
| | % $SiO_2$ | 35,0 | 34,3 | 35,4 | 35,0 | 34,5 | 34,8 | 0,41 | 1,18 |
| | % BaO | 30,7 | 30,4 | 30,4 | 30,7 | 30,7 | 30,6 | 0,17 | 0,55 |
| | % SrO | 6,7 | 6,9 | 7,4 | 6,9 | 6,7 | 6,9 | 0,27 | 3,94 |
| Grain n°10 | % $Al_2O_3$ | 29,4 | 28,6 | 27,9 | 28,9 | 28,1 | 28,6 | 0,61 | 2,12 |
| | % $SiO_2$ | 32,9 | 33,2 | 33,7 | 33,1 | 33,4 | 33,2 | 0,31 | 0,92 |
| | % BaO | 30,7 | 30,5 | 30,4 | 30,7 | 30,8 | 30,6 | 0,17 | 0,57 |
| | % SrO | 6,9 | 7,7 | 8,0 | 7,3 | 7,6 | 7,5 | 0,42 | 5,56 |

Le tableau 5 illustre enfin l'homogénéité chimique remarquable entre les différents grains de la poudre selon l'invention.

Pour chaque oxyde considéré, les teneurs moyennes « $z'_i$ » des 10 grains de la poudre selon l'invention testée

$$\left( \overline{z'} = \frac{1}{10} \sum_{i=1}^{10} z'_i \right).$$

du tableau 3 ont été moyennées pour calculer $\overline{z'}$, c'est-à-dire L'écart-type $\sigma'$ a été déterminé de la manière suivante :

$$\sigma' = \sqrt{\frac{1}{10} \sum_{i=1}^{10} \left( z'_i - \overline{z'} \right)^2} \ .$$

Par exemple, pour $Al_2O_3$, la moyenne $z'$ est la moyenne sur les 10 grains des moyennes obtenues sur les 5 pointés effectués sur chacun de ces grains.

Tableau 5

| Poudre de l'exemple 1 selon l'invention | | | |
|---|---|---|---|
| | Moyenne $\bar{z}'$ | Ecart type $\sigma'$ | Ecart-type relatif $\sigma_R'$ |
| % $Al_2O_3$ | 28,3 | 0,16 | 0,57 |
| % $SiO_2$ | 32,8 | 0,18 | 0,56 |
| % BaO | 32 | 0,22 | 0,68 |
| % SrO | 6,9 | 0,31 | 4,50 |

La même analyse sur les analyses chimiques réalisées sur les 10 grains de la poudre de l'art antérieur du tableau 4 donne les résultats illustrés par le tableau 6.

| Poudre de l'exemple comparatif | | | |
|---|---|---|---|
| | Moyenne $\bar{z}'$ | Ecart type $\sigma'$ | Ecart-type relatif $\sigma_R'$ |
| % $Al_2O_3$ | 28,9 | 0,78 | 2,7 |
| % $SiO_2$ | 32,9 | 1,91 | 5,79 |
| % BaO | 29,8 | 2,25 | 7,56 |
| % SrO | 8,4 | 3,91 | 46,51 |

Comme cela apparaît clairement à présent, les grains de la poudre selon l'invention présentent une homogénéité chimique remarquable. La poudre elle-même présente une grande homogénéité, pratiquement tous les grains présentant tous sensiblement la même composition chimique. Ces résultats permettraient d'expliquer les bonnes performances des poudres selon l'invention lorsqu'elles sont incorporées dans un mélange de départ destiné à un revêtement pour barrière environnementale.

Bien entendu, la présente invention n'est pas limitée aux modes de réalisation décrits et représentés fournis à titre d'exemples illustratifs et non limitatifs.

**Revendications**

1. Poudre comportant au moins 95 % en nombre de grains fondus, présentant la composition chimique suivante, en pourcentages massiques sur la base des oxydes, et pour un total de 100 % :

    - 25,9% $\leq$ BaO $\leq$ 35,4%,
    - 0 $\leq$ SrO $\leq$ 31,8%,
    - 27,2% $\leq$ $Al_2O_3$ $\leq$ 31,3%,
    - 32% $\leq$ $SiO_2$ $\leq$ 36,9%,
    - Autres espèces $\leq$ 1 %,

    la taille desdits grains étant comprise entre 5 à 150 microns.

2. Poudre selon la revendication précédente, dans laquelle lesdits grains présentent la composition chimique suivante :

    - 2,8% $\leq$ SrO $\leq$ 28,2%, et/ou
    - 27,5% $\leq$ $Al_2O_3$ $\leq$ 30,8%, et/ou
    - 32,4% $\leq$ $SiO_2$ $\leq$ 36,3%, et/ou
    - Autres espèces $\leq$ 0,7%.

3. Poudre selon la revendication précédente, dans laquelle lesdits grains présentent la composition chimique suivante :

    - 4,2% $\leq$ SrO $\leq$ 11,7%, et/ou,
    - 27,7% $\leq$ $Al_2O_3$ $\leq$ 28,7%, et/ou

- Autres espèces ≤ 0,5%.

4.  Poudre selon la revendication précédente, dans laquelle lesdits grains présentent la composition chimique suivante :

     - 29,8% ≤ BaO ≤ 33,6%, et/ou
     - 5,7% ≤ SrO ≤ 8,6%, et/ou
     - 27,9% ≤ $Al_2O_3$ ≤ 28,3%, et/ou
     - 32,9% ≤ $SiO_2$ ≤ 33,3%.

5.  Poudre selon l'une quelconque des revendications précédentes, dans laquelle la taille desdits grains est supérieure à 10 microns et/ou la taille desdits grains est inférieure à 125 microns.

6.  Poudre selon la revendication précédente, dans laquelle la taille desdits grains est inférieure à 45 microns.

7.  Poudre selon l'une quelconque des revendications précédentes, dans laquelle les grains sont au moins en partie cristallisés, et dans laquelle les phases celsian et hexacelsian représentent au total plus de 10 % en volume desdits grains.

8.  Poudre selon la revendication précédente dans laquelle les phases celsian et hexacelsian représentent au total plus de 20 % en volume desdits grains.

9.  Poudre selon l'une quelconque des revendications précédentes, lesdits grains représentant plus de 99 % en nombre des particules de ladite poudre.

10. Poudre selon l'une quelconque des revendications précédentes, dans laquelle plus de 80% en masse desdits grains présentent une homogénéité chimique telle que :

     - l'écart-type relatif pour $SiO_2$, $\sigma_{R\ SiO2}$, est inférieur à 4%, et
     - l'écart-type relatif pour $Al_2O_3$, $\sigma_{R\ Al2O3}$, est inférieur à 4%, et
     - l'écart-type relatif pour BaO, $\sigma_{R\ BaO}$, est inférieur à 15%, et
     - l'écart-type relatif pour SrO, $\sigma_{R\ SrO}$, est inférieur à 15%,

     l'écart-type relatif $\sigma_R$ pour un oxyde étant calculé par la formule suivante :

$$\sigma_R = 100 \times (\sigma / \bar{z}),$$

     où

     -

$$\sigma = \sqrt{\frac{1}{n} \sum_{i=1}^{n} \left(z_i - \bar{z}\right)^2},$$

     - n désigne le nombre de mesures, supérieur à 3, en des emplacements choisis de manière aléatoire dans le grain considéré,
     - $z_i$ désigne la teneur massique de l'oxyde considéré mesurée localement à l'emplacement « i » du grain, et
     - z désigne la teneur massique moyenne de l'oxyde considéré dans le grain, obtenue en moyennant arithmétiquement les valeurs $z_i$.

11. Poudre selon la revendication précédente, dans laquelle

     - l'écart-type relatif pour $SiO_2$, $\sigma_{R\ SiO2}$, est inférieur à 3%, et/ou
     - l'écart-type relatif pour $Al_2O_3$, $\sigma_{R\ Al2O3}$, est inférieur à 3%, et/ou
     - l'écart-type relatif pour BaO, $\sigma_{R\ BaO}$, est inférieur à 10%, et/ou
     - l'écart-type relatif pour SrO, $\sigma_{R\ SrO}$, est inférieur à 10%.

**12.** Procédé de fabrication d'une poudre selon l'une quelconque des revendications précédentes, comportant les étapes suivantes :

a) préparation d'une charge de départ comportant des précurseurs de BSAS,
b) fusion de la charge de départ de manière à former un bain de liquide en fusion ;
c) solidification du liquide en fusion;
d) optionnellement, réduction granulométrique et/ou sélection granulométrique et/ou déferrage et/ou atomisation et/ou agglomération puis consolidation par traitement thermique,

la charge de départ étant déterminée de manière qu'à l'issue de l'étape c) ou de l'étape d) la poudre soit conforme à l'une quelconque des revendications précédentes et dans lequel, à l'étape b), le bain est maintenu en fusion pendant une durée supérieure à 10 secondes.

**13.** Procédé selon la revendication précédente, dans lequel, à l'étape b), le bain est maintenu en fusion pendant une durée supérieure à 1 minute.

**14.** Dispositif choisi parmi une turbine à gaz, un échangeur de chaleur et un moteur à combustion interne, comportant une barrière environnementale obtenue à partir d'une poudre fabriquée au moyen d'un procédé selon l'une quelconque des revendications 12 à 13 ou d'une poudre selon l'une quelconque des revendications 1 à 11.

**Patentansprüche**

**1.** Pulver, das zahlenmäßig mindestens 95 % geschmolzene Körner beinhaltet, welche die folgende chemische Zusammensetzung in Massenprozent auf der Basis der Oxide und bei einer Summe von 100 % aufweisen:

- 25,9 % $\leq$ BaO $\leq$ 35,4 %,
- 0 $\leq$ SrO $\leq$ 31,8 %,
- 27,2 % $\leq$ Al$_2$O$_3$ $\leq$ 31,3 %,
- 32 % $\leq$ SiO$_2$ $\leq$ 36,9 %,
- Sonstige $\leq$ 1 %,

wobei die Größe der Körner zwischen 5 und 150 Mikrometer beträgt.

**2.** Pulver nach dem vorhergehenden Anspruch, bei dem die Körner die folgende chemische Zusammensetzung aufweisen:

- 2,8 % $\leq$ SrO $\leq$ 28,2 % und/oder
- 27,5 % $\leq$ Al$_2$O$_3$ $\leq$ 30,8 % und/oder
- 32,4 % $\leq$ SiO$_2$ $\leq$ 36,3 % und/oder
- Sonstige $\leq$ 0,7 %.

**3.** Pulver nach dem vorhergehenden Anspruch, bei dem die Körner die folgende chemische Zusammensetzung aufweisen:

- 4,2 % $\leq$ SrO $\leq$ 11,7 % und/oder,
- 27,7 % $\leq$ Al$_2$O$_3$ $\leq$ 28,7 % und/oder
- Sonstige $\leq$ 0,5 %.

**4.** Pulver nach dem vorhergehenden Anspruch, bei dem die Körner die folgende chemische Zusammensetzung aufweisen:

- 29,8 % $\leq$ BaO $\leq$ 33,6 % und/oder
- 5,7 % $\leq$ SrO $\leq$ 8,6 % und/oder
- 27,9 % $\leq$ Al$_2$O$_3$ $\leq$ 28,3 % und/oder
- 32,9 % $\leq$ SiO$_2$ $\leq$ 33,3 %.

**5.** Pulver nach einem der vorhergehenden Ansprüche, bei dem die Größe der Körner mehr als 10 Mikrometer beträgt und/oder die Größe der Körner weniger als 125 Mikrometer beträgt.

6. Pulver nach dem vorhergehenden Anspruch, bei dem die Größe der Körner weniger als 45 Mikrometer beträgt.

7. Pulver nach einem der vorhergehenden Ansprüche, bei dem die Körper zumindest teilweise kristallisiert sind und bei dem die Celsian- und Hexacelsianphasen insgesamt mehr als 10 Vol.-% der Körner ausmachen.

8. Pulver nach dem vorhergehenden Anspruch, bei dem die Celsian- und Hexacelsianphasen insgesamt mehr als 20 Vol.-% der Körner ausmachen.

9. Pulver nach einem der vorhergehenden Ansprüche, bei dem die Körner zahlenmäßig mehr als 99 % der Partikel des Pulvers ausmachen.

10. Pulver nach einem der vorhergehenden Ansprüche, bei dem mehr als 80 Gew.-% der Körner eine derartige chemische Homogenität aufweisen, dass:

- die relative Standardabweichung für $SiO_2$, $\sigma_R\ SiO_2$, kleiner als 4 % ist und
- die relative Standardabweichung für $Al_2O_3$, $\sigma_R\ Al_2O_3$, kleiner als 4 % ist und
- die relative Standardabweichung für $BaO$, $\sigma_R\ BaO$, kleiner als 15 % ist und
- die relative Standardabweichung für $SrO$, $\sigma_R\ SrO$, kleiner als 15 % ist,

wobei die relative Standardabweichung $\sigma_R$ für ein Oxid mit der folgenden Formel berechnet wird:

$$\sigma_R = 100\ \times\ (\sigma\ /\ \bar{z}),$$

worin

$$\sigma = \sqrt{\frac{1}{n}\sum_{i=1}^{n}(z_i - \bar{z})^2}$$

- n die Anzahl der Messungen, größer als 3, an zufällig gewählten Positionen im betrachteten Korn bezeichnet,
- $z_i$ den Massengehalt des betrachteten Oxids bezeichnet, der lokal an der Position "i" des Korns gemessen wird, und
- $\bar{z}$ den durchschnittlichen Massengehalt des betrachteten Oxids in dem Korn bezeichnet, der durch arithmetisches Mitteln der Werte $z_i$ erhalten wird.

11. Pulver nach dem vorhergehenden Anspruch, bei dem

- die relative Standardabweichung für $SiO_2$, $\sigma_R\ SiO_2$, kleiner als 3 % ist und/oder
- die relative Standardabweichung für $Al_2O_3$, $\sigma_R\ Al_2O_3$, kleiner als 3 % ist und/oder
- die relative Standardabweichung für $BaO$, $\sigma_R\ BaO$, kleiner als 10 % ist und/oder
- die relative Standardabweichung für $SrO$, $\sigma_R\ SrO$, kleiner als 10 % ist.

12. Verfahren zum Herstellen eines Pulvers nach einem der vorhergehenden Ansprüche, das die folgenden Schritte umfasst:

a) Zubereiten eines Ansatzes, der Vorläufer von BSAS beinhaltet,
b) Schmelzen des Ansatzes, so dass ein Schmelzebad gebildet wird;
c) Erstarren der Schmelze;
d) optional Korngrößenverringerung und/oder Korngrößenselektion und/oder Enteisenung und/oder Atomisierung und/oder Agglomeration, dann Verfestigen durch thermische Behandlung,

wobei der Ansatz so bestimmt wird, dass das Pulver nach Schritt c) oder Schritt d) die Merkmale eines der vorhergehenden Ansprüche aufweist und wobei das Bad in Schritt b) während länger als 10 Sekunden geschmolzen gehalten wird.

13. Verfahren nach dem vorhergehenden Anspruch, wobei das Bad in Schritt b) länger als 1 Minute geschmolzen gehalten wird.

14. Vorrichtung, die unter einer Gasturbine, einem Wärmetauscher und einer Brennkraftmaschine gewählt ist und eine Umweltbarriere beinhaltet, die ausgehend von einem mittels eines Verfahrens nach einem der Ansprüche 12 bis 13 hergestellten Pulver oder von einem Pulver nach einem der Ansprüche 1 bis 11 erhalten wird.

**Claims**

1. Powder comprising at least 95% by number of fused grains, having the chemical composition below, in percentages by mass on the basis of the oxides, and for a total of 100%:

   - 25.9% ≤ BaO ≤ 35.4%,
   - 0 ≤ SrO ≤ 31.8%,
   - 27.2% ≤ $Al_2O_3$ ≤ 31.3%,
   - 32% ≤ $SiO_2$ ≤ 36.9%,
   - other species ≤ 1%,

   the size of said grains being between 5 to 150 microns.

2. Powder according to the preceding claim, in which said grains have the chemical composition below:

   - 2.8% ≤ SrO ≤ 28.2%, and/or
   - 27.5% ≤ $Al_2O_3$ ≤ 30.8%, and/or
   - 32.4% ≤ $SiO_2$ ≤ 36.3%, and/or
   - other species ≤ 0.7%.

3. Powder according to the preceding claim, in which said grains have the chemical composition below:

   - 4.2% ≤ SrO ≤ 11.7%, and/or
   - 27.7% ≤ $Al_2O_3$ ≤ 28.7%, and/or
   - other species ≤ 0.5%.

4. Powder according to the preceding claim, in which said grains have the chemical composition below:

   - 29.8% ≤ BaO ≤ 33.6%, and/or
   - 5.7% ≤ SrO ≤ 8.6%, and/or
   - 27.9% ≤ $Al_2O_3$ ≤ 28.3%, and/or
   - 32.9% ≤ $SiO_2$ ≤ 33.3%.

5. Powder according to any of the preceding claims, in which the size of said grains is greater than 10 microns and/or the size of said grains is less than 125 microns.

6. Powder according to the preceding claim, in which the size of said grains is less than 45 microns.

7. Powder according to any of the preceding claims, in which the grains are at least partly crystallized, and in which the celsian and hexacelsian phases represent in total more than 10% by volume of said grains.

8. Powder according to the preceding claim, in which the celsian and hexacelsian phases represent in total more than 20% by volume of said grains.

9. Powder according to any of the preceding claims, said grains representing more than 99% by number of the particles in said powder.

**10.** Powder according to any of the preceding claims, in which more than 80% by mass of said grains have a chemical homogeneity such that:

- the relative standard deviation for $SiO_2$, $\sigma_{R\ SiO2}$, is less than 4%, and
- the relative standard deviation for $Al_2O_3$, $\sigma_{R\ Al2O3}$, is less than 4%, and
- the relative standard deviation for BaO, $\sigma_{R\ BaO}$, is less than 15%, and
- the relative standard deviation for SrO, $\sigma_{R\ SrO}$, is less than 15%,

the relative standard deviation $\sigma_R$ for an oxide being calculated by the formula below:

$$\sigma_R = 100 \times (\sigma/\bar{z})\ ,$$

where

$$\sigma = \sqrt{\frac{1}{n}\sum_{i=1}^{n}\left(z_i - \bar{z}\right)^2}\ ,$$

- n denotes the number of measurements, greater than 3, at locations selected at random in the grain in question,
- $z_i$ denotes the content by mass of oxide in question, measured locally at the location "i" of the grain, and
- $\bar{z}$ denotes the average content by mass of the oxide in question in the grain, obtained by arithmetic averaging of the values $z_i$.

**11.** Powder according to the preceding claim, in which

- the relative standard deviation for $SiO_2$, $\sigma_{R\ SiO2}$, is less than 3%, and/or
- the relative standard deviation for $Al_2O_3$, $\sigma_{R\ Al2O3}$, is less than 3%, and/or
- the relative standard deviation for BaO, $\sigma_{R\ BaO}$, is less than 10%, and/or
- the relative standard deviation for SrO, $\sigma_{R\ SrO}$, is less than 10%.

**12.** Method for producing a powder according to any of the preceding claims, comprising the following steps:

a) preparation of a feedstock comprising BSAS precursors,
b) melting of the feedstock to form a bath of molten liquid;
c) solidification of the molten liquid;
d) optionally, particle size reduction and/or particle size selection and/or iron removal and/or atomization and/or agglomeration then consolidation by thermal treatment,

the feedstock being determined such that at the end of step c) or step d), the powder is compliant with any of the preceding claims and in which, in step b), the bath is maintained in molten form for a duration of greater than 10 seconds.

**13.** Method according to the preceding claim, in which, in step b), the bath is maintained in molten form for a duration of greater than 1 minute.

**14.** Device, selected from a gas turbine, a heat exchanger and an internal combustion engine, comprising an environmental barrier coating obtained from a powder produced by means of a method according to either of Claims 12 and 13 or from a powder according to any of Claims 1 to 11.

Fig. 1

Fig. 2

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6254935 B
- US 2005238888 A
- US 6787195 B
- US 7226668 B
- JP 3916094 B
- FR 1208577
- FR 75893
- FR 82310
- US 6387456 B

**Littérature non-brevet citée dans la description**

- **KANG N. LEE et al.** Residual stresses and their effects on the durability of environmental barrier coating for Sic ceramics. *J. Am. Ceram. Soc,* 2005, vol. 88 (12), 3483-3488
- **KANG N. LEE et al.** Upper temperature limit of environmental barrier coating based on Mullite and BSAS. *J. Am. Ceram. Soc,* 2003, vol. 86 (8), 1299-1306